# EUROPÄISCHE PATENTSCHRIFT

(11) **EP 0 992 407 B1**
(45) Veröffentlichungstag und Bekanntmachung des Hinweises auf die Patenterteilung: **01.12.2004**
(21) Anmeldenummer: 99116816.2
(22) Anmeldetag: 01.09.1999
(51) Int. Cl.: B60R 22/46, B60R 21/32

(54) **Sicherheitsmodul mit Auslösesensor**
Safety module with triggering sensor
Module de sécurité comportant un capteur de déclenchement

(30) Priorität: 30.09.1998 DE 19845013
(43) Veröffentlichungstag der Anmeldung: 12.04.2000
(73) Patentinhaber: Volkswagen Aktiengesellschaft, 38436 Wolfsburg (DE)
(72) Erfinder: Bürger, Hartmut, Dr.-Ing., 38110 Braunschweig (DE); Fehrmann, Hans, Dipl.-Ing., 38446 Wolfsburg (DE); Bernhardt, Günter, 38458 Velpke (DE); Gottwald, Manfred, 38446 Wolfsburg (DE)

(56) Entgegenhaltungen:
- DE-A- 3 503 330
- DE-A- 4 419 911

## Beschreibung

Die Erfindung betrifft einen Sicherheitsmodul mit Auslösesensor gemäß der Gattung des Anspruchs 1.

Um bei einem Unfall ein Sicherheitssystem, wie beispielsweise einen Gurtstraffer oder einen Airbag, auslösen zu können, werden in den entsprechenden Sicherheitsmodulen Auslösesensoren verwendet, die federbelastete Trägheitsmassen enthalten können. Damit der in einem Sicherheitsmodul enthaltene Auslösesensor keine Fehlauslösung beim Zuschlagen einer Tür oder bei starken Fahrbahnunebenheiten veranlaßt, kann der Auslösesensor mit einer gegen eine Feder arbeitenden Trägheitsmasse, welche zusätzlich in ihrer Bewegung durch ein sich langsam abbauendes Luftpolster gedämpft ist, ausgebildet sein. Eine solche Anordnung ist aus gattungsbildenden DE 35 05 330 A1 bekannt.

Ein weiterer bezüglich des Auslösewertes optimierter Sensor mit einer Übertotpunktkinematik ist in der DE 44 19 911 A1 beschrieben. Diesem Stand der Technik ist gemeinsam, dass ein Eingriff in den Auslösesensor vorgenommen wird.

Das deutsche Gebrauchsmuster 94 06 812 beschreibt die Anordnung eines Verzögerungssensors zur Auslösung bzw. Aktivierung eines Airbags oder eines Gurtstraffers, bei dem zur Vermeidung von Fehlauslösungen ein schwingungsdämpfendes Prallblech unterhalb des Montagebereichs des Verzögerungssensors angeordnet ist, das dazu dient. den Stoß von gegen den Fahrzeuaunterboden geschleuderten Gegenständen abzufangen.

Die beschriebene Fehlauslösung kann auch dann auftreten, wenn der Sicherheitsmodul über einen federelastischen Befestigungsbügel am Fahrzeug befestigt ist.

Der Erfindung liegt die Aufgabe zugrunde, einen gattungsgemäßen Sicherheitsmodul für Fahrzeuge mit einem Auslösesensor zu schaffen, bei dem mit möglichst einfachen Mitteln ohne Eingriff in die Mechanik des Auslösesensors sichergestellt wird, daß durch die im normalen Fahrzeugbetrieb auftretenden Schwingungen und Erschütterungen keine Fehlauslösung erfolgt.

Die Lösung dieser Aufgabe erhält man durch die im Anspruch 1 aufgeführten Merkmale.

Als besonders einfache und sehr wirkungsvolle Maßnahme wird erfindungsgemäß zur Tilgung der im normalen Fahrzeugbetrieb auftretenden Erschütterungen eine Tilgermasse an einem den Auslösesensor aufnehmenden Bauteil angebracht. Die Tilgermasse kann dabei am Grundkörper des Auslösesensors oder vorzugsweise außen am Gehäuse des Sicherheitsmoduls, der den Auslösesensor aufnimmt, angebracht sein. Die äußere Anbringung am Gehäuse des Sicherheitsmoduls hat den Vorteil, daß an dem Sicherheitsmodul praktisch keine konstruktiven Änderungen vorgenommen werden müssen, so daß sämtliche im Gehäuse des Sicherheitsmoduls untergebrachten Einrichtungen unverändert belassen werden können. Um die erwünschte Dämpfung zur Vermeidung von Fehlauslösungen zu erreichen, genügt es also, eine Metallplatte oder eine anders geformte Tilgermasse außen am Gehäuse des Sicherheitsmoduls anzubringen.

Dabei ermöglicht gerade die Kombination eines in Gestalt eines federelastischen Befestigungsbügels ausgeführten Federelements in Verbindung mit einer außen am Gehäuse angebrachten Tilgermasse eine sehr gute Abstimmung des Systems auf das jeweilige Fahrzeug, um Fehlauslösungen zu vermeiden.

Bei dem Sicherheitsmodul kann es sich beispielsweise um einen Gurtstraffer oder um einen Airbagmodul handeln. Ein solcher Sicherheitsmodul umfaßt den Erschütterungssensor und insbesondere auch die zur Aktivierung des jeweiligen Sicherheitssystems erforderlichen Einrichtungen. Dabei handelt es sich vornehmlich um pyrotechnische Einrichtungen, mit denen beispielsweise ein Gurtstraffer im Falle eines vom Auslösesensor festgestellten Unfalls aktiviert werden kann.

Ein als Gurtstraffer ausgebildeter Sicherheitsmodul kann mit der erfindungsgemäß vorgesehenen Tilgermasse an einer Säule des Fahrzeugs angebracht werden, die an eine Seitenschiebetüre angrenzt. Dadurch wird sichergestellt, daß insbesondere auch die beim Zuschlagen einer Seitenschiebetüre auftretenden starken Erschütterungen nicht zu einer Fehlauslösung des Gurtstraffers führen.

Die Erfindung wird nachfolgend anhand eines in der Zeichnung dargestellten Ausführungsbeispiels näher erläutert.

Es zeigen:
Figur 1 die Vorderansicht eines Sicherheitsmoduls, der als Gurtstraffer ausgebildet ist, und
Figur 2 die Seitenansicht des in Figur 1 dargestellten Sicherheitsmoduls.

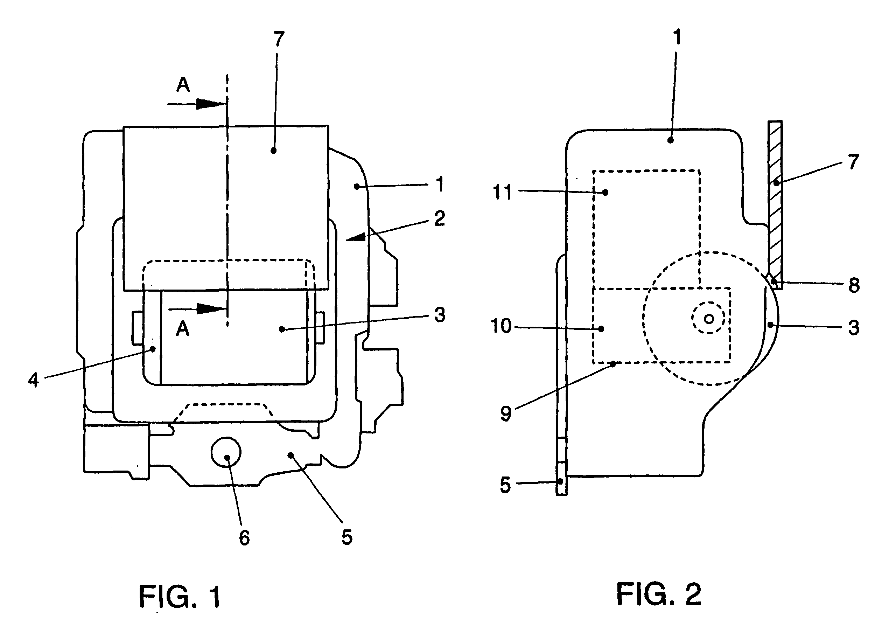

Der in Figur 1 dargestellte Sicherheitsmodul beinhaltet in seinem Gehäuse 1 einen Gurtstraffer 2, dessen Gurtwickel 3 mit einer Wickeleinrichtung 4 in Wirkverbindung steht. An der Rückseite des Sicherheitsmoduls befindet sich ein federelastischer Befestigungsbügel 5 mit einem Befestigungsloch 6, um den Sicherheitsmodul mittels einer nicht dargestellten Befestigungsschraube, beispielsweise an der B-Säule eines Kraftfahrzeugs, befestigen zu können.

Außen ist am Gehäuse 1 eine Tilgermasse 7 in Form einer Metallplatte befestigt, die den Gurtwickel 3 teilweise überdeckt.

In Figur 2 ist die als Metallplatte ausgebildete Tilgermasse 7 im Schnitt gemäß der Schnittlinie A-A von Figur 1 dargestellt. Im unteren Bereich besitzt die Metallplatte einen Ausschnitt 8, in den der Gurtwickel 3 hineinragt.

Mit unterbrochenen Linien 9 ist die im Gehäuse 1 angeordnete Wickeleinrichtung 4 angedeutet, die von einem Auslösesensor 10 und einer nicht näher dargestellten pyrotechnischen Einrichtung, die ebenfalls wie der Auslösesensor 10 an sich bekannt ist, bei einem Unfall aktiviert wird.

## Patentansprüche

1. Sicherheitsmodul für Fahrzeuge mit einem Auslösesensor (10) zur Aktivierung oder Auslösung eines Sicherheitssystems bei einem Unfall und mit einer Schutzeinrichtung zur Vermeidung von Fehlauslösungen, **dadurch gekennzeichnet, dass** die Schutzeinrichtung gebildet ist durch eine Kombination aus einem zur Befestigung des Sicherheitsmoduls an dem Fahrzeug vorgesehenen Federelement (5) und einer Tilciermasse (7) an einem den Auslösesensor (10) aufnehmenden Bauteil zur Abstimmung auf das jeweilige Fahrzeug, um Fehlauslösungen zur vermeiden.

2. Sicherheitsmodul nach Anspruch 1, **dadurch gekennzeichnet, daß** der Auslösesensor (10) in einem Gehäuse (1) des Sicherheitsmoduls untergebracht und die Tilgermasse (7) an diesem Gehäuse (1) befestigt ist.

3. Sicherheitsmodul nach einem der Ansprüche 1 oder 2, **dadurch gekennzeichnet, daß** der Sicherheitsmodul ein Gurtstraffer ist.

4. Sicherheitsmodul nach Anspruch 3, **dadurch gekennzeichnet, daß** die Tilgermasse (7) eine Metallplatte ist, die außen am Gehäuse (1) des Sicherheitsmoduls befestigt ist.

5. Sicherheitsmodul nach Anspruch 4, **dadurch gekennzeichnet, daß** die Metallplatte einen Ausschnitt (8) hat, in den der Gurtwickel (3) des Gurtstraffers hineinragt.

6. Sicherheitsmodul nach einem der Ansprüche 1 oder 2, **dadurch gekennzeichnet, daß** der Sicherheitsmodul ein Airbagmodul ist.

7. Sicherheitsmodul nach einem der vorhergehenden Ansprüche, **dadurch gekennzeichnet, daß** der Sicherheitsmodul von dem Auslösesensor (10) bei einem Unfall pyrotechnisch ausgelöst oder aktiviert wird.

8. Sicherheitsmodul nach einem der vorhergehenden Ansprüche, **dadurch gekennzeichnet, daß** das Federelement ein federelastischer Befestigungsbügel (5) ist, mit dem der Sicherheitsmodul am Fahrzeug zu befestigen ist.

9. Fahrzeug mit einem Sicherheitsmodul nach einem der Ansprüche 3 bis 5, **dadurch gekennzeichnet, daß** der als Gurtstraffer ausgebildete Sicherheitsmodul an einer Säule der Kraftfahrzeugkarosserie befestigt ist, an die eine Seitenschiebetür angrenzt.

## Claims

1. Safety module for vehicles having a triggering sensor (10) for activating or triggering a safety system in the event of an accident, and having a protection device for avoiding inappropriate triggering, **characterized in that** the protection device is formed by a combination of a spring element (5) which is provided for attaching the safety module to the vehicle, and a damper mass (7) on a component which holds the triggering sensor (10), in order to carry out adjustment to the respective vehicle so as to avoid inappropriate triggering.

2. Safety module according to Claim 1, **characterized in that** the triggering sensor (10) is accommodated in a housing (1) of the safety module and the damper mass (7) is attached to this housing (1).

3. Safety module according to one of Claims 1 or 2, **characterized in that** the safety module is a seat belt pretensioner.

4. Safety module according to Claim 3, **characterized in that** the damper mass (7) is a metal plate which is attached to the outside of the housing (1) of the safety module.

5. Safety module according to Claim 4, **characterized in that** the metal plate has a cutout (8) into which the belt winder (3) of the seat belt pretensioner projects.

6. Safety module according to one of Claims 1 or 2, **characterized in that** the safety module is an airbag module.

7. Safety module according to one of the preceding claims, **characterized in that** the safety module is triggered or actuated pyrotechnically by the triggering sensor (10) in the event of an accident.

8. Safety module according to one of the preceding claims, **characterized in that** the spring element is a spring-elastic attachment (5) by means of which the safety module is to be fastened to the vehicle.

9. Vehicle having a safety module according to one of Claims 3 to 5, **characterized in that** the safety module which is embodied as a seat belt pretensioner is attached to a pillar of the bodywork of the motor vehicle which is adjoined by a sliding side door.

## Revendications

1. Module de sécurité pour véhicules comportant un capteur de déclenchement (10) pour l'activation ou le déclenchement d'un système de sécurité en cas d'accident et comportant un dispositif de protection pour éviter des déclenchements intempestifs, **caractérisé en ce que** le dispositif de protection est formé par une combinaison d'un élément de ressort (5) prévu pour la fixation du module de sécurité sur le véhicule et d'une masse d'amortissement (7) sur un composant recevant le capteur de déclenchement (10) en vue de l'adaptation au véhicule particulier, afin d'éviter des déclenchements intempestifs.

2. Module de sécurité selon la revendication 1, **caractérisé en ce que** le capteur de déclenchement (10) est monté dans un boîtier (1) du module de sécurité et la masse d'amortissement (7) est fixée sur ce boîtier (1).

3. Module de sécurité selon l'une quelconque des revendications 1 ou 2, **caractérisé en ce que** le module de sécurité est un rétracteur de ceinture.

4. Module de sécurité selon la revendication 3, **caractérisé en ce que** la masse d'amortissement (7) est une plaque métallique qui est fixée à l'extérieur sur le boîtier (1) du module de sécurité.

5. Module de sécurité selon la revendication 4, **caractérisé en ce que** la plaque métallique a une découpe (8) dans laquelle pénètre le rouleau de la ceinture (3) du rétracteur de ceinture.

6. Module de sécurité selon l'une quelconque des revendications 1 ou 2, **caractérisé en ce que** le module de sécurité est un module d'airbag.

7. Module de sécurité selon l'une quelconque des revendications précédentes, **caractérisé en ce que** le module de sécurité est déclenché ou activé par voie pyrotechnique par le capteur de déclenchement (10) dans le cas d'un accident.

8. Module de sécurité selon l'une quelconque des revendications précédentes, **caractérisé en ce que** l'élément de ressort est un arceau de fixation élastique à ressort (5) avec lequel le module de sécurité doit être fixé au véhicule.

9. Véhicule avec un module de sécurité selon l'une quelconque des revendications 3 à 5, **caractérisé en ce que** le module de sécurité réalisé sous forme de rétracteur de ceinture est fixé à une colonne de la carrosserie du véhicule automobile contre laquelle s'applique une porte coulissante latérale.
